# EUROPÄISCHE PATENTSCHRIFT

(11) **EP 2 373 396 B1**
(45) Veröffentlichungstag und Bekanntmachung des Hinweises auf die Patenterteilung: **30.01.2013**
(21) Anmeldenummer: 09799031.1
(22) Anmeldetag: 16.12.2009
(51) Int. Cl.: B01D 46/04, B01D 46/08

(54) **TROPFENABSCHEIDERANORDNUNG**
MIST ELIMINATOR ARRANGEMENT
DISPOSITIF EXTRACTEUR DE GOUTTELETTES

(30) Priorität: 20.12.2008 DE 202008016961 U
(43) Veröffentlichungstag der Anmeldung: 12.10.2011
(73) Patentinhaber: Rehau AG & Co, 95111 Rehau (DE)
(72) Erfinder: SCHETTLER, Thomas, 95111 Rehau (DE); SCHIERJOTT, Uwe, 95194 Regnitzlosau (DE)
(86) Internationale Anmeldenummer: PCT/EP2009/009039
(87) Internationale Veröffentlichungsnummer: WO 2010/069558

(56) Entgegenhaltungen:
- WO-A1-2004/055445
- DE-A1- 4 028 531
- DE-C- 513 573

## Beschreibung

Die Erfindung betrifft eine Tropfenabscheideranordnung für Luftwäscher, Entfeuchter, Befeuchter, Kühlanlagen und dergleichen, angeordnet an oder in wenigstens einem Strömungskanal zur Abscheidung von Flüssigkeits- und/oder Feststoffpartikeln aus im Strömungskanal strömenden Medien.

Derartige Tropfenabscheideranordnungen sind bekannt und werden bisher sehr vielseitig verwendet bei Luftwäschern, Entfeuchtern, Befeuchtern, Kühlanlage und dergleichen. Derartige Tropfenabscheideranordnungen werden beispielsweise als Lamellenabscheider bezeichnet, mit denen Strömungsumlenkungen erzielt werden, wodurch eine Abscheidung von Flüssigkeitströpfchen bzw. Feststoffpartikeln erreicht wird. Die Flüssigkeitströpfchen strömen entlang den Profilelementen nach unten in der Tropfenabscheideranordnung, genauso wie die Feststoffpartikel. Die abgeschiedenen Partikel werden im unteren Bereich der Tropfenabscheideranordnung gesammelt und gelangen über Auslassöffnungen in darunter angeordnete Rinnen, über die sie abgeführt werden.
Eine derartige Tropfenabscheideranordnung arbeitet beispielsweise nach dem sog. Prallflächenprinzip. Der zu reinigende Luftstrom wird in verschiedene Einzelströme geteilt und umgelenkt. Dadurch werden an dem Tropfen Trägheitskräfte wirksam, die diese auf die Profilelemente prallen lassen. Durch die Tropfen wird ein Flüssigkeitsfilm gebildet, der von der Strömung vorwärts getrieben wird. Die eigentliche Trennung von Flüssigkeitsfilm und Luftstrom erfolgt in Phasentrennkammem, wobei dort die wieder beruhigte Flüssigkeit unter Schwerkrafteinfluss nach unten weg rinnt und aus dem System entfernt werden kann. Die entsprechende Ausbildung der Phasenkammer verhindert die Ablösung und Wirbelbildung. Kleinere Tropfen können an das Nachbarprofilelement gelangen und werden im Bereich von Riefen bzw. den dahinterliegenden Fangnasen abgeschieden. Der Abscheidegrad der Tropfenabscheideranordnungen ist im Wesentlichen von der Größe und Anzahl der abzuscheidenden Tropfen, von der Strömungsgeschwindigkeit und der Zähigkeit des Gases sowie von der Konstruktion der Tropfenabscheideranordnung abhängig. Die Effizienz einer Tropfenabscheideranordnung wird letztendlich durch das Zusammenwirken der Faktoren Querschnitt der Profilelemente, Oberflächenbeschaffenheit, Druckverlust und Druckabfall, Abscheidegrad und Grenztropfengröße, Korrosionsverhalten, Teilung, Wärmeformbeständigkeit sowie Gewährleistung gewisser hygienischer Zustände beschrieben.
Neben der reinen Luftentfeuchtung bewirkt eine Tropfenabscheideranordnung auch, dass Schadstoffe, die beispielsweise im Luftwäscher an die Flüssigkeit übergegangen sind, nicht mit Luft ausgetragen werden. Darüber hinaus ist von Vorteil, dass nachfolgende Anlagenteile nicht durch Korrosion angegriffen werden und Nachfolgeanlagen nicht wegen Verstopfung der Kanäle vorzeitig ausgeschaltet werden müssen. Ein weiterer Aspekt bei den bekannten Tropfenabscheideranordnungen ist beispielsweise beim Einsatz von Profilelement aus polymeren Werkstoffen. Beispielsweise bei produktionsfrisch hergestellten polymeren Profilelementen ist das Wasserbenetzungsverhalten nicht optimal. Erst nach einer Betriebszeit von wenigen Stunden wird der gewünschte Wirkungsgrad der Tropfenabscheideranordnung erreicht.
Die WO 2004/055445 A1 offenbart ein Luftkanalmodul, ausgebildet zum Einsatz in den Querschnitt eines abstromseitigen Luftkanals einer Luftbefeuchtungseinrichtung, mit einer Vielzahl zueinander parallel angeordneter, im Wesentlichen identischer Flächenstücke, die in etwa parallel zur Richtung des Luftstroms ausgerichtet sind und deren Ausdehnung in Richtung des Luftstroms wesentlich größer gewählt ist als die Beabstandung zweier benachbarter Flächenstücke. Weiterhin sind die Flächenstücke wellenförmig ausgebildet bzw zickzack-förmig beschrieben. Die Flächenstücke können dabei aus Metall, vorzugsweise aus Kupfer, hergestellt sein.
Die DE 513573 beschreibt einen Filter für Gase, Dämpfe und Flüssigkeiten mit parallel zueinander mit ihrer Hauptebene parallel und / oder schräg zur Strömungsrichtung angeordneten Profilelementen, deren Abstände, Lochungen bzw. Spalten immer enger bzw. kleiner werden, wobei im unteren Bereich des Filters oder des Strömungskanals wenigstens eine Auffangvorrichtung für die abgeschiedenen Flüssigkeits- und / oder Feststoffpartikel vorgesehen ist. Der Werkstoff der Profilelemente ist dabei Blech, Eisen, Messing, kann aber auch Glas, Ton, Steingut, Holz usw. sein.

Derartige Tropfenabscheideranordnungen arbeiten trotz alledem sehr zufriedenstellend, sie bieten jedoch weiterhin Raum für Verbesserungen hinsichtlich der Reduzierung der Kosten sowie der Energie aber auch insbesondere im Bezug auf die Abscheideeffizienz und Effektivität.

Die Erfindung hat sich die Aufgabe gestellt, die Nachteile des Standes der Technik zu überwinden und eine Tropfenabscheideranordnung aufzuzeigen, die kostengünstig und wirtschaftlich herstellbar ist, die eine Ablagerung von aggressiven Stoffen beziehungsweise Mikroorganismen auf ihrer Oberfläche deutlich verringert beziehungsweise gar nicht erst zulässt und bei der die Materialeigenschaften im Dauereinsatz erhalten bleiben.

Erfindungsgemäß wird diese Aufgabe durch die Merkmale des Anspruches 1 gelöst. Weitere die Erfindung detailliert beschreibende und ergänzende Merkmale sind in den Unteransprüchen ausgeführt.

Die erfindungsgemäße Tropfenabscheideranordnung für Luftwäscher, Entfeuchter, Befeuchter, Kühlanlagen und dergleichen, angeordnet an oder in wenigstens einem Strömungskanal zur Abscheidung von Flüssigkeits- und/oder Feststoffpartikeln aus im Strömungskanal strömenden Medien, mit parallel zueinander mit ihrer Hauptebene parallel und/oder schräg zur Strömungsrichtung angeordneten Profilelementen, wobei im unteren Bereich der Tropfenabscheideranordnung oder des Strömungskanals wenigstens eine Auffangvorrichtung für die abgeschiedene Flüssigkeits- und/oder Feststoffpartikel vorgesehen ist, zeichnet sich dadurch aus, dass der Werkstoff des Profilelementes ausgewählt ist aus der Gruppe der Polyolefine, der Acrylnitril-Butadien-Styrole, der Polyamide, der Polyvinylchloride, der Ethylenvinylacetate, der Polyacetale, der Polymethylmethacrylate, der Polyethylenterephthalate, der Polycarbonate, der thermoplastischen Copolyester, der Styrol-Blockcopolymere, der thermoplastischen Copolyamide, der thermoplastischen Elastomere oder aus Mischungen dieser, dass der Werkstoff des Profilelementes der Tropfenabscheideranordnung wenigstens ein oligodynamisch wirkendes Material in einer Menge von 0,05 bis zu 20 % bezogen auf die Gesamtmasse, eingelagert enthält, welches an wenigstens einer, der Strömungsrichtung der strömenden Medien, zuweisenden Oberfläche angeordnet ist.

Die erfindungsgemäße Tropfenabscheideranordnung zeichnet sich weiterhin dadurch aus, dass der Werkstoff des Profilelementes der Tropfenabscheideranordnung über den gesamten Querschnitt in räumlich gleich bleibender Verteilung wenigstens ein oligodynamisch wirkendes Material in einer Menge von 0,05 bis zu 20 % bezogen auf die Gesamtmasse, einlagert enthält.

In einer weiteren vorteilhaften Ausführungsform ist die erfindungsgemäße Tropfenabscheideranordnung so ausgeführt, dass der Werkstoff des Profilelementes der Tropfenabscheideranordnung wenigstens ein oligodynamisch wirkendes Material in einer Menge von 0,05 bis 20 % bezogen auf die Gesamtmasse, eingelagert enthält, welches vorzugsweise der der Strömungsrichtung der strömenden Medien, zuweisenden Oberfläche der Profilelemente angeordnet ist.
Somit kann vorteilhafter Weise erreicht werden, dass die der Strömungsrichtung der strömenden Medien, zuweisenden Oberfläche der Profilelemente der Tropfenabscheideranordnung so ausgebildet ist, dass keine chemisch beziehungsweise biologisch bedingten Verkrustungen beziehungsweise Bewuchse sich anlagern und ausbilden können.

Das oligodynamisch wirkende Material des Profilelementes der erfindungsgemäßen Tropfenabscheideranordnung ist in einer weiteren Ausführungsform eine bakterizid und /oder mikrobizid wirkende Metallkomponente.
Es liegt jedoch auch im Rahmen der Erfindung, dass das oligodynamisch wirkende Material des Profilelementes der efindungsgemäßen Tropfenabscheideranordnung eine metallorganische Verbindung, wie bspw. Zinkpyrithion und / oder eine metallanorganische Verbindung, wie bspw. ein Silberzeolith ist.

Das Profilelement der erfindungsgemäßen Tropfenabscheideranordnung weist eine signifikante bakterizide Wirkung gegenüber Pseudomonas aeruginosa, Salmonella typhimurium, Salmonella choleraesius, Listeria monocytogenes, Staphylococcus aureus, Alcaligenes faecalis, Escherichia coli und Enterococcus faecalis auf. Es konnte weiterhin vorteilhaft festgestellt werden, dass das Profilelement der erfindungsgemäßen Tropfenabscheideranordnung eine signifikante fungizide Wirkung gegenüber Candida albicans aufweist.

Bei dem Profilelement der erfindungsgemäßen Tropfenabscheideranordnung ist die Metallkomponente eine Metallionen abgebende Substanz, die durch den Kontakt mit bspw. einer Flüssigkeit, insbesondere beim im bestimmungsgemäßen Einsatz der Tropfenabscheideranordnung, die Metallionen freisetzt.
Es konnte überraschend gefunden werden, dass die Metallionen abgebende Substanz ein Salz, Oxid, Carbid, eine metallorganische und / oder metallanorganische Verbindung ist, die aus der Gruppe Silber, Gold, Kupfer, Zink, Blei, Arsen, Cadmium ausgewählt ist.

Entgegen der Lehre des Standes der Technik, derartige Profilelementes bzw die Tropfenabscheideranordnungen regelmäßig zu reinigen bzw. zu ersetzen, konnte überraschend gefunden werden, dass beim Einsatz der erfindungsgemäßen Tropfenabscheideranordnung und Verwendung einer metallabgebenden Substanz aus der Gruppe der Zeolithe, wobei diese sowohl natürlich vorkommende als auch industriell hergestellte Zeolithe sind, die Reinigung bzw. Sanierung weitestgehend entfällt.

Das Profilelement der Tropfenabscheideranordnung zeichnet sich außerdem erfindungsgemäß dadurch aus, dass ein Teil der im Zeolith enthaltenen Metalle durch wenigsten eine Art von Ionen austauschbaren Metallen ersetzt ist, die aus der Gruppe Silber, Gold, Kupfer, Zink, Blei, Arsen, Cadmium ausgewählt sind. Hier haben sich beispielsweise Wirkstoffe auf der Basis von Sodium Alumosilicaten ausgezeichnet.
Ein weiterer Vorteil des Profilelementes der erfindungsgemäßen Tropfenabscheideranordnung wird dadurch gesehen, dass eine langfristige Sicherstellung des Nichtbildens bzw. Anwachsens von Belägen in bspw. Klimageräten sichergestellt ist, da die Metallionen abgebende Substanz in einer mittleren Korngröße von etwa 0,1 bis 10 µm in dem Werkstoff des Profilelementes der Tropfenabscheideranordnung so eingearbeitet werden kann, dass sowohl eine Verteilung über den gesamten Querschnitt in räumlich gleichmäßiger Verteilung, als auch eine Verteilung vorzugsweise in wenigstens einer, der Strömungsrichtung der strömenden Medien, zuweisenden Oberfläche der Tropfenabscheideranordnung realisierbar ist.

Bei der Verwendung eines Werkstoffes des Profilelementes der Tropfenabscheideranordnung mit wenigsten ein oligodynamisch wirkendem Material in einer Menge von 0,05 bis 20 % bezogen auf die Gesamtmasse in einer Tropfenabscheideranordnung für Luftwäscher, Entfeuchter, Befeuchter, Kühlanlagen und dergleichen, angeordnet an oder in wenigstens einem Strömungskanal zur Abscheidung von Flüssigkeits- und/oder Feststoffpartikeln aus im Strömungskanal strömenden Medien, mit parallel zueinander mit ihrer Hauptebene parallel und/oder schräg zur Strömungsrichtung angeordneten Profilelementen, wobei im unteren Bereich der Tropfenabscheideranordnung oder des Strömungskanals wenigstens eine Auffangvorrichtung für die abgeschiedene Flüssigkeits- und/oder Feststoffpartikel vorgesehen ist kann eine signifikante Verbesserung der Eigenschaften bezüglich der Verarbeitung sowie der Ablagerung aggressiver Stoffe durch die Tropfenabscheideranordnung realisiert werden.

Weiterhin vorteilhaft wird gesehen, dass auch bereits bei Tropfenabscheideranordnungen, welche mit den Nachteilen des bekannten Standes zur Technik behaftet sind, eine kostengünstige "Sanierung" realisiert werden kann, die zu den gleichen Vorteilen wie eine ursprünglich montierte erfindungsgemäße Tropfenabscheideranordnung führt.

Es liegt jedoch auch im Rahmen der Erfindung, dass der Werkstoff des Profilelementes der Tropfenabscheideranordnung in einer Menge von 0,05 bis zu 20 % bezogen auf die Gesamtmasse Fungizide wie beispielsweise DCOIT (4,5-Dichlor-2-N-octyl-4-isothiazolin-3-on Dichloroctylisothiazolinon), OIT (2-N-octyl-4-isothiazolin-3-on), Bethoxazin (3-Benzo[b]thien-2-yl-5,6-dihydro-1,4,2-oxathiazin,4-oxid), Fluorfolpet (2-(Dichlorfluormethylthio)-isoindol-1,3-dion N-Fluordichlormethylthiophthalimid Fluorcaptan Fluorphaltan), OBPA (10,10'-Oxybispenoxyarsin) beziehungsweise BCM (Methyl-N-(2-benzimidazolyl) -carbamat Benzimidazolylcarbaminsäuremethylester Carbendazim) aufweist.

Im Folgenden soll an den die Erfindung nicht einschränkenden Beispielen, diese näher beschrieben werden.

Es zeigen:
- Fig. 1:: perspektivische Darstellung eines Luftwäschers mit einer erfindungsgemäßen Tropfenabscheideranordnung.
- Fig. 2:: perspektivische Darstellung eines Profilelementes der erfindungsgemäßen Tropfenabscheideranordnung.

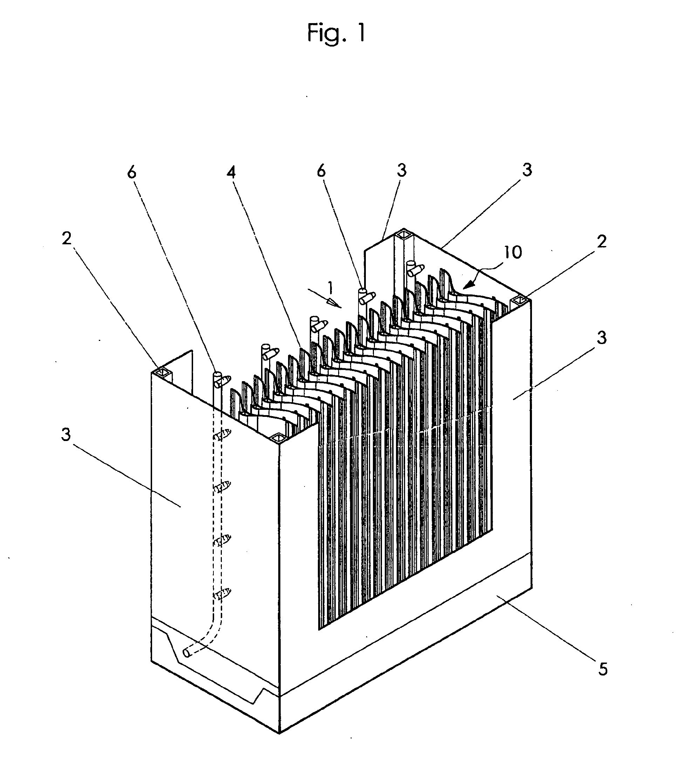

In Fig. 1 ist eine perspektivische Darstellung eines Luftwäschers mit einer erfindungsgemäßen Tropfenabscheideranordnung 10 dargestellt. Der an sich bekannte Luftwäscher besteht aus zu einem Rahmen verbundenen Profilen 2, die über Abdeckelemente 3 miteinander verbunden und abgedichtet sind. Im unteren Bereich ist eine Auffangvorrichtung 5 angeordnet, für abgeschiedene Flüssigkeits- und/oder Feststoffpartikel. Im Inneren des Luftwäschers ist eine in einem Strömungskanal 1 zur Abscheidung von Flüssigkeits - und/oder Feststoffpartikeln aus im Strömungskanal 1 strömenden Medien angeordnete Tropfenabscheideranordnung 10 dargestellt. Die Tropfenabscheideranordnung 10 besteht in diesem Ausführungsbeispiel aus parallel zueinander mit ihrer Hauptebene parallel und/oder schräg zur Strömungsrichtung des Strömungskanals 1 angeordneten Profilelementen 4. Die Profilelemente 4 der Tropfenabscheideranordnung 10 zeichnen sich dadurch aus, dass der Werkstoff der Profilelemente 4 wenigstens ein oligodynamisch wirkendes Material in einer Menge von 0,05 bis zu 20 % bezogen auf die Gesamtmasse, eingelagert enthält, welches eine Ablagerung von aggressiven Stoffen beziehungsweise Mikroorganismen auf ihrer Oberfläche deutlich verringert beziehungsweise gar nicht erst zulässt.
Die Tropenabscheideranordnung 10 ist etwas oberhalb der Auffangvorrichtung 5, beispielsweise am Rahmen 2 des Luftwäschers, angeordnet, so dass eine ausreichende Trennung von Flüssigkeitsspiegel und Gasstrom erreicht ist und ein Mitreißen von Flüssigkeit und deren Sammlung in der Auffangvorrichtung 5 verhindert ist. Die Auffangvorrichtung 5 muss so dimensioniert sein, dass sie die abgeschiedenen Flüssigkeits- und/oder Feststoffpartikel in ausreichender Form aufnimmt, so dass diese über an sich bekannte Leitungen bzw. Pumpen heraustransportiert werden können.
Durch den Einsatz der erfindungsgemäßen Tropfenabscheideranordnung 10 in dem an sich bekannten Luftwäscher wird neben der Verhinderung der Ablagerung von aggressiven Stoffen beziehungsweise Mikroorganismen auf der Oberfläche der Profilelemente 4 erreicht, dass die Materialeigenschaften im Dauereinsatz erhalten bleiben.
Durch eine optimale Anordnung der Profilelemente 4 in der erfindungsgemäßen Tropfenabscheideranordnung 10 ist somit eine Steigerung der Tropfenabscheideeffizienz möglich bei gleichzeitig reduziertem Reinigungs- bzw. Desinfektionsaufwand des Luftwäschers und auch einem reduziertem Energieverbrauch. In diesem Ausführungsbeispiel ist im Werkstoff der in Strömungsrichtung des Strömungskanals 1 der strömenden Medien weisenden Profilelemente 4 die Metallionenabgebende Komponete eine metallorganische Substanz ausgewählt aus der Gruppe der Zeolithe in einer Menge von etwa 0,5 bis 1,0 % bezogen auf die Gesamtmasse, eingelagert.
Somit ist es mit der erfindungsgemäßen Tropfenabscheideranordnung 10 möglich, die bekannten Luftwäscher, Entfeuchter, Befeuchter, Kühlanlagen und dergleichen wirtschaftlicher sowie energiesparender zu betreiben und es wird neben der Verhinderung der Ablagerung von aggressiven Stoffen beziehungsweise Mikroorganismen auf der Oberfläche der Profilelemente 4 erreicht, dass die Materialeigenschaften im Dauereinsatz erhalten bleiben. Die Profilelemente 4 der erfindungsgemäßen Tropfenabscheideranordnung 10 sind in diesem Ausführungsbeispiel aus einem polymeren Werkstoff der Gruppe der Polyolefine, die kostengünstig hergestellt und ebenfalls korrosionsbeständig sind.

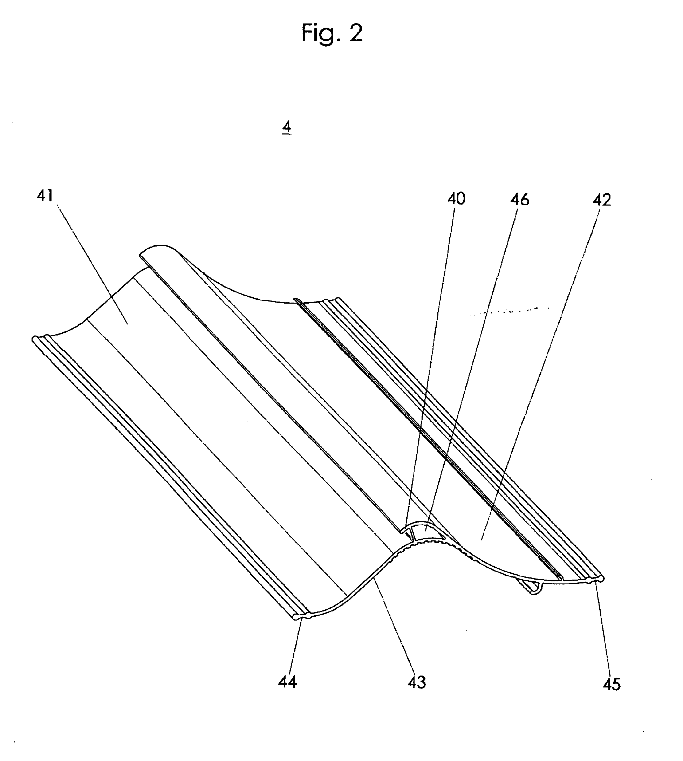

In Fig. 2 ist ein Profilelement 4 der erfindungsgemäßen Tropfenabscheideranordnung 10 in perspektivischer Form dargestellt.
Das Profilelement 4 weist eine im Querschnitt etwa halbrunde Form auf, während die freien Enden 44, 45 des Profilelementes 4 etwa horizontal angeordnet sind.
Die Oberfläche 41 des Profilelementes 4 weist in diesem Ausführungsbeispiel eine Funktionsschicht auf, die oligodynamische Eigenschaften besitzt und ausgewählt ist aus der Gruppe der Chelat-Komplexe.
Die Oberfläche 42, 43 des Profilelementes 4 sind in diesem Ausführungsbeispiel ohne Funktionsschicht, können jedoch bei Bedarf auch eine derartige Funktionsschicht aufweisen.
Die Oberfläche 41 des Profilelementes 4 ist über ein als Fangnase ausgebildetes wegragendes Element 40 von der Oberfläche 42 getrennt. Das als Fangnase ausgestaltete wegragende Element 40 weist eine Hohlkammer 46 auf, welche die mechanische Festigkeit des als Fangnase ausgebildeten wegragenden Elementes 40 verstärkt. Die Oberfläche des als Fangnase ausgebildeten wegragenden Elementes 40 weist in diesem Ausführungsbeispiel keine Funktionsschicht auf.
Bei bestimmungsgemäßer Verwendung der Tropfenabscheideranordnung 10 sind die Profilelemente 4 parallel zueinander mit ihrer Hauptebene parallel und/oder schräg zur Strömungsrichtung angeordnet und die Oberfläche 41 des Profilelementes 4 weist vorzugsweise die Funktionsschicht auf.

Es liegt jedoch auch im Rahmen der Erfindung, dass die gesamte in Strömungsrichtung des Strömungskanals 1 angeordnete Oberfläche des als Fangnase ausgebildeten wegragenden Elementes 40 ebenfalls eine Funktionsschicht mit oligodynamischen Eigenschaften aufweist.
Die somit erreichbare Tropfenabscheideeffizienz der erfindungsgemäßen Tropfenabscheideranordnung 10 wird somit nochmals weiter optimiert und über einen längeren Zeitraum weitgehend wartungsfrei zur Verfügung gestellt.
Die Erfindung soll nun an diesen nicht einschränkenden Beispielen weiter beschrieben werden

### Beispiel 1:

Die erfindungsgemäße Tropfenabscheideranordnung 10 weist ein Profilelement 4 auf, bestehend aus:

| | |
|---|---|
| 98 bis 99 % | Polypropylen |
| 0,5 bis 2,0 % | Silbersalz X₂ₙO- Na₂O- Al₂O₃- 2SiO₂ X= Ag⁺ |

### Beispiel 2:

Die erfindungsgemäße Tropfenabscheideranordnung 10 weist ein Profilelement 4 auf, bestehend aus:

| | |
|---|---|
| 94 - 99,4 % | Polyvinylchlorid |
| 0,1 bis 1,0% | Silbersalz X₂ₙO- Na₂O- Al₂O₃- 2SiO₂ X= Ag⁺ |
| 0,5 bis 5 % | OBPA (10,10'-Oxybispenoxyarsin) |

### Beispiel 3:

Die erfindungsgemäße Tropfenabscheideranordnung 10 weist ein Profilelement 4 auf, bestehend aus:

| | |
|---|---|
| 95 bis 99,9 % | Styrolcopolymer |
| 0,1 bis 5 % | Silbersalz X₂ₙO- Na₂O- Al₂O₃- 2SiO₂ X= Ag⁺ |

## Patentansprüche

1. Tropfenabscheideranordnung (10) für Luftwäscher, Entfeuchter, Befeuchter, Kühlanlagen und dergleichen, angeordnet an oder in wenigstens einem Strömungskanal (1) zur Abscheidung von Flüssigkeits- und/oder Feststoffpartikeln aus im Strömungskanal (1) strömenden Medien, mit parallel zueinander mit ihrer Hauptebene parallel und/oder schräg zur Strömungsrichtung angeordneten Profilelementen (4), wobei im unteren Bereich der Tropfenabscheideranordnung (10) oder des Strömungskanals wenigstens eine Auffangvorrichtung (5) für die abgeschiedene Flüssigkeits- und/oder Feststoffpartikel vorgesehen ist, **dadurch gekennzeichnet, dass** der Werkstoff des Profilelementes (4) ausgewählt ist aus der Gruppe der Polyolefine, der Acrylnitril-Butadien-Styrole, der Polyamide, der Polyvinylchloride, der Ethylenvinylacetate, der Polyacetale, der Polymethylmethacrylate, der Polyethylenterephthalate, der Polycarbonate, der thermoplastischen Copolyester, der Styrol-Blockcopolymere, der thermoplastischen Copolyamide, der thermoplastischen Elastomere oder aus Mischungen dieser, dass der Werkstoff des Profilelementes (4) wenigstens ein oligodynamisch wirkendes Material in einer Menge von 0,05 bis zu 20 %, bezogen auf die Gesamtmasse, eingelagert enthält, welches an wenigstens einer, der Strömungsrichtung der strömenden Medien, zuweisenden Oberfläche (41) angeordnet ist.

2. Tropfenabscheideranordnung (10) nach Anspruch 1, **dadurch gekennzeichnet, dass** der Werkstoff des Profiletementes (4) über seinen gesamten Querschnitt in räumlich gleichmäßiger Verteilung wenigstens ein oligodynamisch wirkendes Material in einer Menge von 0,05 bis zu 20 %, bezogen auf die Gesamtmasse, eingelagert enthält.

3. Tropfenabscheideranordnung (10) nach Anspruch 1 bis 2, **dadurch gekennzeichnet, dass** das oligodynamisch wirkende Material eine bakterizid und / oder microbizid wirkende Metallkomponente ist.

4. Tropfenabscheideranordnung (10) nach Anspruch 1 bis 3, **dadurch gekennzeichnet, dass** das oligodynamisch wirkende Material eine metallorganische und / oder metallanorganische Verbindung ist.

5. Tropfenabscheideranordnung (10) nach Anspruch 1 bis 4, **dadurch gekennzeichnet, dass** das oligodynamisch wirkende Material eine signifikante Wirkung gegenüber Pseudomonas aeruginosa, Salmonella typhimurium, Salmonella choleraesius, Listeria monocytogenes, Staphylococcus aureus, Alcaligenes faecalis, Escherichia coli, Candida albicans, Enterococcus faecalis aufweist.

6. Tropfenabscheideranordnung (10) nach Anspruch 1 bis 5, **dadurch gekennzeichnet, dass** die Metallkomponente eine metallorganische oder Metallionen abgebende Substanz ist.

7. Tropfenabscheideranordnung (10) nach Anspruch 1 bis 6, **dadurch gekennzeichnet, dass** die Metallkomponente durch den Kontakt mit der Flüssigkeit, insbesondere Wasser, die Metallionen freisetzt.

8. Tropfenabscheideranordnung (10) nach Anspruch 1 bis 7, **dadurch gekennzeichnet, dass** die Metallionen abgebende Substanz ein Salz, Oxid, Carbid, eine metallorganische und / oder metallanorganische Verbindung ist, die aus der Gruppe Silber, Gold, Kupfer, Zink, Blei, Arsen, Cadmium ausgewählt ist.

9. Tropfenabscheideranordnung (10) nach Anspruch 1 bis 8, **dadurch gekennzeichnet, dass** die Metallionen abgebende Substanz aus der Gruppe der Zeolithe und / oder der Chelat-Komplexe ausgewählt ist.

10. Tropfenabscheideranordnung (10) nach Anspruch 1 bis 9, **dadurch gekennzeichnet, dass** ein Teil der im Zeolith und/ oder dem Chelat-Komplex enthaltenen Metalle durch wenigstens eine Art von Ionen austauschbaren Metallen ersetzt ist, die aus der Gruppe Silber, Gold, Kupfer, Zink, Blei, Arsen, Cadmium ausgewählt sind.

## Claims

1. Mist eliminator arrangement (10) for air washers, dehumidifiers, humidifiers, refrigeration plants and the like, arranged on or in at least one duct (1) for separating off liquid particles and/or solid particles from media flowing in the duct (1), with profile elements (4) arranged in parallel to one another with their main plane parallel and/or oblique relative to the direction of flow, wherein, in the lower region of the mist eliminator arrangement (10) or of the duct, at least one collection device (5) is provided for the separated-off liquid particles and/or solid particles, **characterized in that** the material of the profile element (4) is selected from the group of the polyolefins, the acrylonitrile butadiene styrenes, the polyamides, the polyvinyl chlorides, the ethylene vinyl acetates, the polyacetals, the polymethyl methacrylates, the polyethylene terephthalates, the polycarbonates, the thermoplastic copolyesters, the styrene block copolymers, the thermoplastic copolyamides, the thermo¬plastic elastomers or from mixtures of these, that the material of the profile element (4) contains at least one oligodynamically effective material incorporated in an amount of from 0.05 up to 20%, based on the total mass, which is arranged at at least one surface (41) pointing in the direction of flow of the flowing media.

2. Mist eliminator arrangement (10) according to Claim 1, **characterized in that** the material of the profile element (4) contains, over its entire cross section in spatially uniform distribution, at least one oligodynamically effective material incorporated in an amount of from 0.05 up to 20%, based on the total mass.

3. Mist eliminator arrangement (10) according to Claims 1 and 2, **characterized in that** the oligodynamically effective material is a bactericidally and/or microbicidally effective metal component.

4. Mist eliminator arrangement (10) according to Claims 1 to 3, **characterized in that** the oligodynamically effective material is an organo-metallic and/or inorganometallic compound.

5. Mist eliminator arrangement (10) according to Claims 1 to 4, **characterized in that** the oligodynamically effective material has a significant effect towards Pseudomonas aeruginosa, Salmonella typhimurium, Salmonella choleraesius, Listeria monocytogenes, Staphylococcus aureus, Alcaligenes faecalis, Escherichia coli, Candida albicans, Enterococcus faecalis.

6. Mist eliminator arrangement (10) according to Claims 1 to 5, **characterized in that** the metal component is an organometallic substance or a substance that gives off metal ions.

7. Mist eliminator arrangement (10) according to Claims 1 to 6, **characterized in that** the metal component releases the metal ions as a result of the contact with the liquid, in particular water.

8. Mist eliminator arrangement (10) according to Claims 1 to 7, **characterized in that** the substance that gives off metal ions is a salt, oxide, carbide, organometallic and/or inorganometallic compound which is selected from the group silver, gold, copper, zinc, lead, arsenic, cadmium.

9. Mist eliminator arrangement (10) according to Claims 1 to 8, **characterized in that** the substance that gives off metal ions is selected from the group of the zeolites and/or the chelate complexes.

10. Mist eliminator arrangement (10) according to Claims 1 to 9, **characterized in that** some of the metals present in the zeolite and/or the chelate complex are replaced by at least one type of ion-exchangeable metals which are selected from the group silver, gold, copper, zinc, lead, arsenic, cadmium.

## Revendications

1. Dispositif extracteur de gouttelettes (10) pour laveurs d'air, humidificateurs, déshumidificateurs, installations de refroidissement et similaires, disposé sur ou dans au moins un conduit d'écoulement (1) pour l'extraction de particules de liquides et/ou de solides de fluides circulant dans le conduit d'écoulement (1), avec des éléments profilés (4) disposés à la parallèle les uns des autres, par leur plan principal à la parallèle et/ou en inclinaison par rapport au sens d'écoulement, au moins un dispositif de collecte (5) pour les particules de liquides et/ou de solides extraites étant prévu dans la zone inférieure du dispositif extracteur de gouttelettes (10) ou du conduit d'écoulement, **caractérisé en ce que** la matière première de l'élément profilé (4) est choisie dans le groupe comprenant les polyoléfines, les styrènes d'acrylonitrile-butadiène, les polyamides, les chlorures de polyvinyle, les acétates d'éthylène-vinyle, les polyacétales, les méthacrylates de polyméthyle, les polyéthylènes téréphtalates, les polycarbonates, les copolyesters thermoplastiques, les copolymères blocs de styrène, les copolyamides thermoplastiques, les élastomères thermoplastiques ou des mélanges de ces derniers, **en ce que** la matière première de l'élément profilé (4) contient au moins une matière à action oligo-dynamique emmagasinée dans une quantité de 0,05 à 20 %, en rapport à la masse totale, laquelle est disposée sur au moins une des surfaces (41) faisant face au sens d'écoulement des fluides circulants.

2. Dispositif extracteur de gouttelettes (10) selon la revendication 1, **caractérisé en ce que** la matière première de l'élément profilé (4) contient sur l'ensemble de sa section transversale, en distribution régulière dans l'espace, au moins une matière à action oligo-dynamique, emmagasinée dans une quantité de 0,05 à 20 %, en rapport à la masse totale.

3. Dispositif extracteur de gouttelettes (10) selon les revendications 1 et 2, **caractérisé en ce que** la matière à action oligo-dynamique est un composant métallique à action bactéricide et/ou microbicide.

4. Dispositif extracteur de gouttelettes (10) selon les revendications 1 à 3, **caractérisé en ce que** la matière à action oligo-dynamique est un composé métallique organique et/ou métallique anorganique.

5. Dispositif extracteur de gouttelettes (10) selon les revendications 1 à 4, **caractérisé en ce que** la matière à action oligo-dynamique exerce une action significative sur le Pseudomonas aeruginosa, la Salmonella typhimurium, la Salmonella choleraesius, la Listeria monocytogenes, le Staphylococcus aureus, les Alcaligenes faecalis, l'Escherichia coli, le Candida albicans, l'Enterococcus faecalis .

6. Dispositif extracteur de gouttelettes (10) selon les revendications 1 à 5, **caractérisé en ce que** le composant métallique est une substance métallique organique ou délivrant des ions métalliques.

7. Dispositif extracteur de gouttelettes (10) selon les revendications 1 à 6, **caractérisé en ce que** le composant métallique libère les ions métalliques par le contact avec le liquide, notamment de l'eau.

8. Dispositif extracteur de gouttelettes (10) selon les revendications 1 à 7, **caractérisé en ce que** la substance délivrant des ions métalliques est un sel, un oxyde, un carbure, un composé métallique organique et/ou métallique anorganique qui est choisi dans le groupe comprenant l'argent, l'or, le cuivre, le zinc, le plomb, l'arsenic, le cadmium.

9. Dispositif extracteur de gouttelettes (10) selon les revendications 1 à 8, **caractérisé en ce que** la substance délivrant des ions métalliques est choisie dans le groupe des zéolithes et/ou des complexes de chélate.

10. Dispositif extracteur de gouttelettes (10) selon les revendications 1 à 9, **caractérisé en ce qu'**une partie des métaux contenus dans la zéolithe et/ou dans le complexe de chélate est remplacée par au moins un type de métaux échangeurs d'ions, qui sont choisis dans le groupe comprenant l'argent, l'or, le cuivre, le zinc, le plomb, l'arsenic, le cadmium.
